# EUROPÄISCHE PATENTSCHRIFT

(11) **EP 1 657 771 B1**
(45) Veröffentlichungstag und Bekanntmachung des Hinweises auf die Patenterteilung: **30.05.2007**
(21) Anmeldenummer: 05022968.1
(22) Anmeldetag: 21.10.2005
(51) Int. Cl.: H01M 8/06

(54) **In einem Kraftfahrzeug mit Verbrennungsmotor als Stromerzeuger eingesetztes Brennstoffzellensystem**
Fuel cell system for production of electricity in a vehicle with internal combustion engine
Système de pile à combustible pour produire de l'éléctricité dans une véhicule avec moteur à combustion interne

(30) Priorität: 11.11.2004 DE 102004054482
(43) Veröffentlichungstag der Anmeldung: 17.05.2006
(73) Patentinhaber: Bayerische Motorenwerke Aktiengesellschaft, 80809 München (DE)
(72) Erfinder: Kammerer, Jürgen, 85276 Pfaffenhofen (DE); Tachtler, Joachim, 85737 Ismaning (DE); Lamp, Peter, Dr., 86916 Kaufering (DE)

(56) Entgegenhaltungen:
- DE-A1- 10 133 390
- US-A1- 2004 058 211
- US-B1- 6 311 650

## Beschreibung

Die Erfindung betrifft ein Kraftfahrzeug mit einem Verbrennungsmotor, einer Einrichtung zur Nachbehandlung der Abgase des Verbrennungsmotors und mit einem als Stromerzeuger eingesetzten Brennstoffzellensystem umfassend einen Reformer zur Umwandlung eines Kraftstoffs in ein Synthesegas, eine Brennstoffzelle zur teilweisen Oxidation des Synthesegases mit Luftsauerstoff und einen mit einer Luftquelle verbundenen Nachverbrenner, wobei der Reformer, die Brennstoffzelle und der Nachverbrenner hintereinander angeordnet und miteinander verbunden sind.

In Kraftfahrzeugen der Zukunft werden zunehmend als APU (auxiliary power unit) bezeichnete Energiewandler Verwendung finden. Diese Energiewandler zeichnet aus, daß sie unabhängig vom Betriebsmodus des Verbrennungsmotors elektrische und thermische Leistung zur Verfügung stellen können. Derartige Energiewandler können insbesondere bei Kraftfahrzeugen mit selbsttätiger Motorabschaltung zu einem wesentlichen Bestandteil des Energiekonzepts werden. Da der Generator bei abgeschaltetem Verbrennungsmotor nicht angetrieben wird, müssen elektrische Verbraucher von Batterien oder anderen elektrischen Speichern gespeist werden, was eine entsprechend hohe Kapazität der Speichermedien erfordert.

Wegen des hohen Wirkungsgrades ist eine Brennstoffzelle als APU zur Stromerzeugung besonders geeignet. Derartige Brennstoffzellen benutzen in heutigen mit Diesel oder Benzin betriebenen Fahrzeugen als Energieträger ein Wasserstoff und Kohlenmonoxid enthaltendes Synthesegas, das mit einem Reformer aus dem Kraftstoff gewonnen wird, der auch dem Verbrennungsmotor zugeführt wird. Bei der in der Brennstoffzelle erfolgenden elektrochemischen Reaktion wird das Synthesegas mit Luftsauerstoff oxidiert, und es wird Wasser und Kohlendioxid gebildet, wobei Wärme und elektrische Leistung entstehen. Die Oxidation des Synthesegases ist aber nur unvollständig, so daß in dem aus der Brennstoffzelle austretenden Abgas noch brennbare Bestandteile, wie z. B. Kohlenmonoxid oder Wasserstoff oder Methan enthalten sind. Diese brennbaren Bestandteile werden in einem Nachverbrenner zu Verbrennungsprodukten Wasser und Kohlendioxid umgesetzt.

Es ist bekannt, daß sich bei Verbrennungsmotoren die Emission von Stickoxiden durch Senkung der Verbrennungstemperatur reduzieren läßt. Zu diesem Zweck dient eine Rückführung des erzeugten Abgases in den Verbrennungsmotor. Zu dem gleichen Zweck und zur Ausbildung einer homogenen Gemischbildung sind auch Reformer-Systeme (ohne Brennstoffzelle) bekannt, die den Verbrennungsmotor mit vorzugsweise kaltem Reformat versorgen. Solche Reformer-Systeme ohne Brennstoffzelle werden auch benutzt, um Abgasnachbehandlungssysteme zur Reduzierung der Emissionen mit vorzugsweise heißem Reformat zu versorgen. Eine solche Nachverbrennung kann aber in bestimmten Betriebszuständen zu einer unerwünscht hohen Temperatur führen. In beiden Fällen wird dem Verbrennungsmotor bzw. dem Abgasnachbehandlungssystem unverbranntes Reformat zugeführt, so daß es im Motor bzw. im Abgassystem zu einer Nachverbrennung kommt.

Aus der US 2004/058211 A1 ist auch bereits ein Kraftfahrzeug mit einem Verbrennungsmotor und einem als Stromerzeuger eingesetzten Brennstoffzellensystem bekannt, umfassend einen Wasserstofftank, eine Brennstoffstelle zur teilweisen Oxidation des Wasserstoffs und einen stromabwärts von der Brennstoffzelle angeordneten Nachverbrenner, wobei zwischen der Brennstoffzelle und dem Nachverbrenner eine Abzweigeinrichtung angeordnet ist, mit der die Abgase der Brennstoffzelle ganz oder teilweise dem Verbrennungsmotor zuführbar sind. Stromabwärts vom Nachverbrenner ist ein Wärmetauscher zur Erwärmung des Kühlwassers des Verbrennungsmotors angeordnet. Eine Einrichtung zur Nachbehandlung der Abgase des Verbrennungsmotors ist jedoch nicht vorgesehen. Bei diesem bekannten Kraftfahrzeug ist es somit möglich, dem Verbrennungsmotor in der Warmlaufphase die verbrannten Abgase der Brennstoffzelle ganz oder teilweise zuzuführen, um die Gemischbildung und damit die Verbrennung zu verbessern.

Der Erfindung liegt die Aufgabe zugrunde, ein Kraftfahrzeug mit einem Brennstoffzellensystem der eingangs genannten Art zu schaffen, mit dem sich wahlweise unverbranntes oder verbranntes Reformat abzweigen und dem Verbrennungsmotor und/oder der diesem zugeordneten Abgasnachbehandlungseinrichtung zuführen läßt.

Die Lösung dieser Aufgabe ist im Patentanspruch 1 angegeben.

Bei dem erfindungsgemäßen Kraftfahrzeug ist es möglich, das im Reformer hergestellte Synthesegas wahlweise in verbranntem oder unverbranntem Zustand abzuzweigen und dem Verbrennungsmotor oder der Abgasnachbehandlungseinrichtung (Abgas-Katalysator und/oder Partikelfilter) zuzuführen. Zur Reduktion der Verbrennungstemperatur im Verbrennungsmotor ist es zweckmäßig, dem Verbrennungsmotor verbranntes Synthesegas zuzuführen. Ferner kann verbranntes, heißes Synthesegas dem Katalysator zugeführt werden, um diesen bei einem kurzen Zwischenstop des Kraftfahrzeugs, beispielsweise an einer Verkehrsampel, auf Betriebstemperatur zu halten. Im Gegensatz dazu sollte dem Verbrennungsmotor in der Warmlaufphase unverbranntes Synthesegas zugeführt werden, um die Gemischbildung und damit die Verbrennung zu verbessern und in der Folge die Rohemissionen zu reduzieren. Desgleichen kann in der Warmlaufphase des Verbrennungsmotors unverbranntes Synthesegas gegebenenfalls zusammen mit Luft dem Katalysator zugeführt werden, um diesen rasch auf Betriebstemperatur aufzuheizen.

Damit das verbrannte Synthesegas die Funktion zur Kühlung des Verbrennungsmotors besonders wirksam erfüllen kann, sollte die entsprechende Abzweigeinrichtung stromabwärts von einem Wärmetauscher angeordnet sein, in dem die der Brennstoffzelle zugeführte Luft erwärmt wird. Da hierbei dem verbrannten Synthesegas Wärme entzogen wird, nimmt seine Temperatur entsprechend ab. In dieser Hinsicht ist es besonders vorteilhaft, wenn stromabwärts vom Wärmetauscher ein Zuheizwärmetauscher, beispielsweise zur Erwärmung des Kühlwassers, angeordnet ist und die Abzweigeinrichtung stromabwärts von dem Zuheizwärmetauscher angeordnet ist. In diesem Fall kommt es zu einer besonders starken Verringerung der Temperatur des verbrannten Synthesegases.

Die Erfindung wird nachfolgend anhand eines Ausführungsbeispiels näher erläutert.

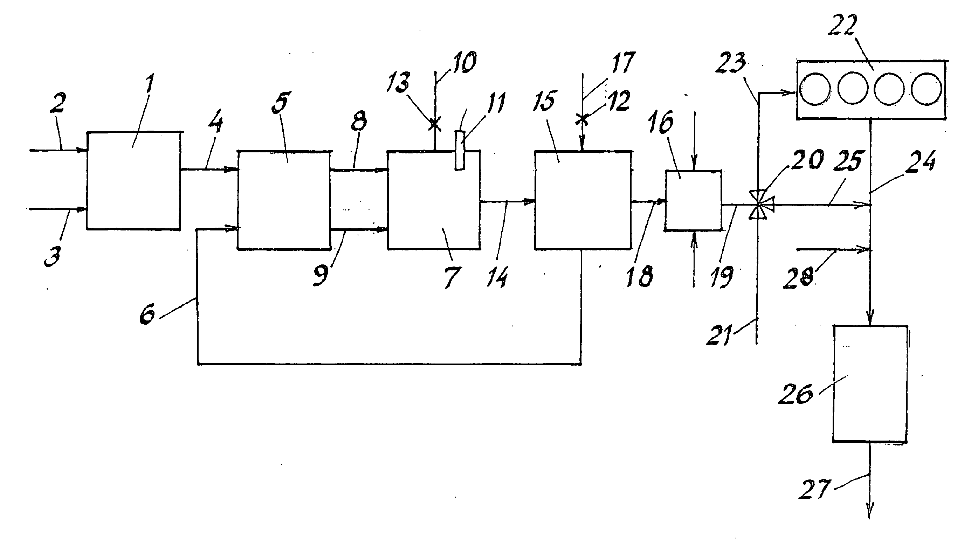

In der einzigen Figur der Zeichnung ist ein Brennstoffzellensystem schematisch dargestellt, das in einem Kraftfahrzeug als Stromerzeuger eingesetzt wird, das mit einem Verbrennungsmotor 22 als Hauptantrieb und mit einer Abgasnachbehandlungseinrichtung 26 ausgerüstet ist.

Einem Reformer 1 wird über eine Leitung 2 Luft und über eine Leitung 3 Kraftstoff zugeführt. Bei diesem Kraftstoff kann es sich um den gleichen Kraftstoff handeln, der auch zum Betrieb des Verbrennungsmotors verwendet wird. In dem Reformer wird der Kraftstoff in sogenanntes Reformat oder Synthesegas umgewandelt. Dies ist bei einem Reformer, der gemäß dem Prinzip der partiellen Oxidation (Teilverbrennung) oder (nahezu) autothermen Reformierung (Teilverbrennung mit Wasserzugabe, Reaktionsenthalpie näherungweise 0) funktioniert, ein Gemisch aus Wasserstoff, Kohlenmonoxid, Stickstoff (Nebenbestandteile Wasser, Kohlendioxid und Kohlenwasserstoffe). Das Synthesegas hat nach der Erzeugung üblicherweise eine Temperatur von 800 bis 1000°C.

Das Synthesegas wird über eine Leitung 4 einer Brennstoffzelle 5 zugeführt. Bei der Brennstoffzelle 5 kann es sich um eine Polymer-Electrolyt-Mebran-Brennstoffzelle (PEMFC) oder um eine Oxidkeramische Brennstoffzelle (SOFC) handeln. Je nach Bauart der Brennstoffzelle ist das Synthesegas zuvor zu konditionieren (PEMFC: typischerweise Entfernung von Kohlenmonoxid bis auf wenige ppm, Abkühlung auf 60 bis 80°C; SOFC: kein Aufwand wegen ähnlich hoher Betriebstemperatur wie Reformer). Je nach Bauart der Brennstoffzelle werden im Anschluß an die Reformierung und eventueller Konditionierung Bestandteile des Synthesegases elektrochemisch umgesetzt (PEMFC: Wasserstoff; SOFC: Wasserstoff, Kohlenmonoxid, Methan), wobei die Verbrennungsprodukte Wasser und Kohlendioxid entstehen. Damit diese elektrochemische Umsetzung des Synthesegases stattfinden kann, wird der Brennstoffzelle 5 über eine Leitung 6 (unter Umständen vorgewärmte) Luft zugeführt.

Der Brennstoffzelle 5 ist ein Nachverbrenner 7 nachgeschaltet. Das in der Brennstoffzelle 5 umgesetzte Synthesegas und die sauerstoffhaltige Restluft gelangt über eine Leitung 8 bzw. 9 in einen Nachverbrenner 7. Der Nachverbrenner 7 ist über eine Leitung 10 mit einer (nicht gezeigten) Luftquelle verbunden. Um die Nachverbrennung in Gang zu setzen, ist der Nachverbrenner 7 ferner mit einem Zündelement 11 versehen. Damit die in dem Abgas der Brennstoffzelle 5 enthaltenen brennbaren Bestandteile in dem Nachverbrenner 7 wahlweise verbrannt oder nicht verbrannt werden können, ist in der Luftleitung 10 ein steuerbares Ventil 13 angeordnet. Das in dem Nachverbrenner 7 behandelte oder nichtbehandelte Abgas gelangt durch eine Leitung 14 in einen Wärmetauscher 15. Der Wärmetauscher 15 ist mit der Luftleitung 6 und mit einer Leitung 17 für die Zufuhr von Frischluft verbunden. In der Luftleitung 17 ist ein steuerbares Ventil 12 angeordnet. Das aus dem Nachverbrenner 7 austretende Abgas wird in dem Wärmetauscher 15 abgekühlt, wogegen die zugeführte Frischluft erwärmt wird. Bei Verwendung einer PEMFC Brennstoffzelle ist eine Erwärmung der Frischluft nicht erforderlich.

Das Abgas strömt von dem Wärmetauscher 15 über eine Leitung 18 in einen Zuheizwärmetauscher 16, der mit einem Zulauf und einem Rücklauf für das Kühlwasser des Verbrennungsmotors 22 versehen ist. Der Zuheizwärmetauscher 16 ist mittels eines (nicht gezeigten) Thermostatventils wahlweise in den Kühlwasserkreislauf des Verbrennungsmotors zuschaltbar, damit sich das Kühlwasser in der Warmlaufphase des Verbrennungsmotors schneller erwärmt. Von dem Zuheizwärmetauscher 16 gelangt das Abgas durch eine Leitung 19 zu einem Dreiwegeventil 20. Das Dreiwegeventil 20 ist mit einer in die Atmosphäre mündenden Abgasleitung 21, mit einer in den Ansaugkanal des Verbrennungsmotors 22 mündenden Leitung 23 und mit einer in den Abgaskanal 24 des Verbrennungsmotors mündenden Leitung 25 verbunden. Das Dreiwegeventil 20 ist ebenso wie die Ventile 12 und 13 mit einer (nicht gezeigten) Steuereinheit verbunden. Alternativ zu dem Dreiwegeventil 20 könnten in den Leitungen 21,23 und 25 auch einzelne Ventile angeordnet sein, die mit der Steuereinheit verbunden sind. Über eine Luftleitung 28 kann dem Abgaskanal 24 des Verbrennungsmotors 22 wahlweise Luft zugeführt werden.

Der Abgaskanal 24 des Verbrennungsmotors 23 mündet in eine Abgasnachbehandlungseinrichtung 26 (Abgaskatalysator und/oder Partikelfilter), aus der das nachbehandelte Abgas durch eine Leitung 27 in die Atmosphäre austritt.

Das Brennstoffzellensystem mit dem vorstehend beschriebenen Aufbau ermöglicht die wahlweise Abzweigung des in dem Reformer 1 erzeugten Synthesegases in verschiedenen Zuständen.

Wenn die Brennstoffzelle 5 nicht arbeitet, beispielsweise weil die Luftzufuhr über die Leitung 6 gesperrt ist oder weil kein Strom abgezogen wird, dann unterbleibt eine teilweise Oxidation des Synthesegases. Wenn in diesem Fall der Nachverbrenner 7 nicht arbeitet, beispielsweise weil das Zündelement 11 nicht betätigt oder die Luftzufuhr über die Leitungen 9 und 10 unterbrochen ist, dann gelangt das Synthesegas in chemisch unverändertem Zustand zu dem Dreiwegeventil 20. Beim Durchströmen des Wärmetauschers 15 und des Zuheizwärmetauschers 16 wird die Temperatur des Synthesegases, die nach Verlassen des Reformers 1 ungefähr 800 bis 100°C beträgt, erheblich verringert. Dieses chemisch unbehandelte Synthesegas kann durch entsprechende Betätigung des Dreiwegeventils 20 über die Leitungen 23, 25 dem Verbrennungsmotor 22 und/oder der Abgasnachbehandlungseinrichtung 26 zugeführt werden. Dies kann in der Warmlaufphase des Verbrennungsmotors zur Verbesserung der Gemischbildung und der Verbrennung und damit zur Absenkung der Rohemissionen zweckmäßig sein. Eine solche Betriebsweise kann ferner zweckmäßig sein, um den Katalysator auf die Betriebstemperatur aufzuheizen. Zu diesem Zweck kann neben dem unbehandelten Synthesegas über die Leitung 28 Verbrennungsluft in den Abgaskanal 24 eingespeist werden.

Wenn die Brennstoffzelle 5 arbeitet, dann kann der Nachverbrenner 7 ebenfalls wahlweise außer Betrieb gesetzt werden, so daß eine Nachverbrennung des Abgases aus der Brennstoffzelle unterbleibt. Dieses nicht nachbehandelte Abgas, das noch brennbare Bestandteile enthält, kann ebenfalls in der Warmlaufphase ganz oder teilweise in das Ansaugsystem des Verbrennungsmotors 22 oder in dessen Abgaskanal 24 eingeleitet werden.

Wenn bei aktivierter oder nicht aktivierter Brennstoffzelle 5 der Nachverbrenner 7 in Gang gesetzt wird, indem über die Leitungen 9 und 10 Luft zugeführt und das Zündelement 11 betätigt wird, dann kann das nachverbrannte Abgas, das keine brennbaren Bestandteile mehr enthält, ebenfalls durch entprechende Betätigung des Dreiwegeventils 20 dem Verbrennungsmotor 22 und/oder der Abgasnachbehandlungseinrichtung 26 zugeführt werden. Da das nachverbrannte Abgas in dem Wärmetauscher 15 auf ca. 400°C abgekühlt wird, eignet es sich zur Reduktion der Verbrennungstemperatur im Motor, in dem Temperaturen von mehr als 2000°C auftreten. Andererseits ist eine Zufuhr des vollständig verbrannten Synthesegases zum Katalysator 26 sinnvoll, um diesen auf Betriebstemperatur (Anspringtemperatur) zu halten. Dies ist beispielsweise bei einem kurzen Zwischenhalt des Kraftfahrzeugs (Ampelstop) sinnvoll.

Abweichend von dem vorstehend beschriebenen Ausführungsbeispiel könnte das Dreiwegeventil 20 auch in der den Nachverbrenner 7 mit dem Wärmetauscher 15 oder in der den Wärmetauscher 15 mit dem Zuheizwärmetauscher 16 verbindenden Leitung angeordnet sein. In diesem Fall wäre die Temperatur des unvollständig oder vollständig verbrannten Synthesegases jedoch höher, weil die Kühlwirkung eines oder beider Wärmetauscher 15, 16 entfällt.

Dem Verbrennungsmotor 22 und der Abgasnachbehandlungseinrichtung 26 sind vorzugsweise Temperaturfühler zugeordnet, deren Meßwerte in der erwähnten Steuereinheit verarbeitet werden. Diese Steuereinheit ist mit den Ventilen 12 und 13, dem Dreiwegeventil 20 und mit dem Zündelement 11 verbunden, um diese den jeweiligen Erfordernissen entsprechend automatisch zu betätigen.

## Patentansprüche

1. Kraftfahrzeug mit einem Verbrennungsmotor (22), einer Einrichtung (26) zur Nachbehandlung der Abgase des Verbrennungsmotors und mit einem als Stromerzeuger eingesetzten Brennstoffzellensystem umfassend einen Reformer (1) zur Umwandlung eines Kraftstoffs in ein Synthesegas, eine Brennstoffzelle (5) zur teilweisen Oxidation des Synthesegases mit Luftsauerstoff und einen mit einer Luftquelle verbundenen Nachverbrenner (7), wobei der Reformer, die Brennstoffzelle und der Nachverbrenner hintereinander angeordnet und miteinander verbunden sind, **dadurch gekennzeichnet, daß** der Nachverbrenner (7) durch Steuerung der Luftzufuhr und/oder einer diesem zugeordneten Zündeinrichtung (11) wahlweise in und außer Betrieb setzbar ist, und daß stromabwärts vom Nachverbrenner (7) eine Abzweigeinrichtung (20) angeordnet ist, mit der wahlweise Reformat oder Abgas ganz oder teilweise dem Verbrennungsmotor (22) und/oder der Abgasnachbehandlungseinrichtung (26) zuführbar ist.

2. Kraftfahrzeug nach Anspruch 1 mit einer SOFC Brennstoffzelle, **gekennzeichnet durch** einen stromabwärts vom Nachverbrenner (7) angeordneten Wärmetauscher (15) zur Erwärmung der der Brennstoffzelle (5) zugeführten Luft.

3. Kraftfahrzeug nach Anspruch 2, **dadurch gekennzeichnet, daß** die Abzweigeinrichtung (20) zwischen dem Nachverbrenner (7) und dem Wärmetauscher (15) angeordnet ist.

4. Kraftfahrzeug nach Anspruch 2, **dadurch gekennzeichnet, daß** die Abzweigeinrichtung (20) stromabwärts vom Wärmetauscher (15) angeordnet ist.

5. Kraftfahrzeug nach Anspruch 4, **dadurch gekennzeichnet, daß** stromabwärts vom Wärmetauscher (15) ein Zuheizwärmetauscher (16) angeordnet ist, und daß die Abzweigeinrichtung (20) stromabwärts von dem Zuheizwärmetauscher angeordnet ist.

## Claims

1. A motor vehicle comprising an internal combustion engine (22), a device (26) for after-treatment of the exhaust gases from the engine, and a power generator in the form of a fuel-cell system comprising a reformer (1) for converting a fuel into a synthesis gas, a fuel cell (5) for partial oxidation of the synthesis gas with atmospheric oxygen, and an after-burner (7) connected to an air source, wherein the reformer, the fuel cell and the after-burner are disposed one behind the other and interconnected, **characterised in that** the after-burner (7) can be put into or out of operation as required by controlling the air supply and/or an ignition device (11) associated therewith, and a branching-off device (20) is disposed downstream of the after-burner (7) for supplying reformate or exhaust gas wholly or partially to the engine (22) and/or to the exhaust after-treatment device (26) as required.

2. A motor vehicle according to claim 1 comprising a SOFC fuel cell, **characterised by** a heat exchanger (15) downstream of the after-burner (7) for heating the air supplied to the fuel cell (5).

3. A motor vehicle according to claim 2, **characterised in that** the branching-off device (20) is disposed between the after-burner (7) and the heat exchanger (15).

4. A motor vehicle according to claim 2, **characterised in that** the branching-off device (20) is disposed downstream of the heat exchanger (15).

5. A motor vehicle according to claim 4, **characterised in that** an additional heat exchanger (16) is disposed downstream of the heat exchanger (15) and the branching-off device (20) is disposed downstream of the additional heat exchanger.

## Revendications

1. Véhicule comportant un moteur à combustion interne (22), un dispositif de post-traitement (26) des gaz d'échappement du moteur à combustion interne, et un système de pile à combustible pour produire de l'électricité comprenant un reformeur (1) pour transformer un combustible en gaz de synthèse, une pile à combustible (5) pour oxyder partiellement le gaz de synthèse avec l'oxygène de l'air et une chambre de postcombustion (7) reliée à une source d'air, le reformeur, la pile à combustible et la chambre de postcombustion étant montés les uns derrière les autres et reliés entre eux,
**caractérisé en ce que**
la chambre de postcombustion (7) peut être mise au choix en service ou hors service par commande de l'amenée d'air et/ou d'un dispositif d'allumage (11) associé à celle-ci, et en aval de la chambre de postcombustion (7) un dispositif de dérivation (20) recycle le reformat ou les gaz d'échappement, au choix, peuvent être entièrement ou partiellement au moteur à combustion interne (22) et/ou au dispositif de post-traitement des gaz d'échappement (26).

2. Véhicule selon la revendication 1 avec une pile à combustible SOFC,
**caractérisé par**
un échangeur de chaleur (15) monté en aval de la chambre de postcombustion (7) pour chauffer l'air apporté à la pile à combustible (5).

3. Véhicule selon la revendication 2,
**caractérisé en ce que**
le dispositif de dérivation (20) est monté entre la chambre de postcombustion (7) et l'échangeur de chaleur (15).

4. Véhicule selon la revendication 2,
**caractérisé en ce que**
le dispositif de dérivation (20) est monté en aval de l'échangeur de chaleur (15).

5. Véhicule selon la revendication 4,
**caractérisé par**
un échangeur de chaleur chauffant (16) en aval de l'échangeur de chaleur (15) et le dispositif de dérivation (20) en aval de l'échangeur de chaleur chauffant.
